# EUROPÄISCHE PATENTSCHRIFT

(11) **EP 0 544 967 B1**
(45) Veröffentlichungstag und Bekanntmachung des Hinweises auf die Patenterteilung: **14.06.1995**
(21) Anmeldenummer: 91810930.7
(22) Anmeldetag: 28.11.1991
(51) Int. Cl.: C21C 5/52, F27D 17/00

(54) **Verfahren zur Unterdrückung von Staub und Rauch bei der Elektrostahlherstellung**
Process for suppression of dust and fumes during electric steel production
Procédé pour supprimer la poussière et la fumée lors de la production d'acier électrique

(43) Veröffentlichungstag der Anmeldung: 09.06.1993
(73) Patentinhaber: CARBAGAS, 3097 Liebefeld (CH); VON ROLL AG, 4563 Gerlafingen (CH)
(72) Erfinder: Herren, Georges, CH-3204 Rosshäusern (CH); Reiber, Dieter, CH-4563 Gerlafingen (CH)
(74) Vertreter: Fischer, Franz Joseph

(56) Entgegenhaltungen:
- EP-A- 0 071 359
- EP-A- 0 125 173
- FR-A- 2 607 829
- FR-A- 2 635 789
- US-A- 4 664 703
- US-A- 4 915 362

## Beschreibung

Die vorliegende Erfindung betrifft ein Verfahren zur Unterdrückung von Staub und Rauch bei der Elektrostahlherstellung aus Mischungen, die Eisenkomponenten, wie Roheisen, Schrott oder direkt reduzierte Eisenpellets enthalten, die sehr stark schwankende Verunreinigungen aufweisen. Beim Beschicken des Ofens wird der Sauerstoff durch Zuleitung von festem CO₂ verdrängt. Das erfindungsgemässe Verfahren vermindert die Rauch- und Staubbildung in grossem Ausmass an der Quelle, wodurch die Schmelzanlage mit einer Filteranlage verminderter Grösse auskommt.

Bisher wurde der bei der Eisenerzeugung anfallende Staub und Rauch abgesaugt und in Filteranlagen ausgeschieden und zur weiteren Entsorgung gesammelt. Mit den zunehmenden Anforderungen der Umweltgesetzgebung muss der Staubausstoss von Schmelzanlagen kontinuierlich reduziert werden, beispielsweise durch eine Vergrösserung der Filteranlagen.

Da aber die brennbaren Verunreinigungen im Schrott wegen der vermehrten Verwendung von Kunststoffen aller Art in Gewerbe und Industrie weiterhin im Zunehmen begriffen sind, und somit die Qualität im anfallenden Schrott eine abnehmenende Tendenz aufweist, sind weitere Massnahmen zur Staubunterdrückung unumgänglich. Demzufolge sind bisher zur Verdrängung des Sauerstoffes bei der Chargierung von Schmelzöfen Versuche mit Inertgas durchgeführt worden. Beispielsweise wurde versucht, den Sauerstoffgehalt über den Abstichrinnen des Hochofens durch Einleiten von Erdgas zu vermindern. Durch diese Massnahme konnte die Menge des anfallenden Staubes um ca. 60 % vermindert werden. Das Verfahren besitzt jedoch den Nachteil, dass die Stickoxidemissionen um den doppelten Wert anstiegen (K. Grützmacher et.al., Stahl und Eisen 111 (1991) Nr. 3, Seiten 51-56).

Weitere Inertisierungs-Versuche wurden mit Stickstoff unternommen, da dieses Gas in Luftzerlegungsanlagen in genügender Menge anfällt. Das Verfahren ermöglichte eine drastische Reduktion der Staubentwicklung. Ebenso konnte eine massive Reduktion der Stickoxidentwicklung festgestellt werden. Die in der obigen Publikation zitierten Versuche wurden in Hochöfen durchgeführt.

Aus der US-A-4 664 703 ist ein Verfahren zur Unterdrückung von Rauch aus Stahlbädern, die rauchbildende Komponenten enthalten, beschrieben. Zu diesem Zwecke wird Erdgas oberhalb des Bades verbrannt. In einer bevorzugten Ausführungsform wird zusätzlich Stickstoff, Argon oder Kohlendioxid zugeführt. Dieses Dokument enthält jedoch keine Hinweise, welche es dem Fachmann nahelegen, festes Kohlendioxid im Verlauf der Beschickungsphase in einen Elekroschmelzofen einzuführen.

Aus der EP-A-0 383 184 ist ein Verfahren zur Reduzierung von Staubemission und freiem Luftzutritt im Abstichbereich eines Hochofens bekannt. Hier wird CO₂-Schnee oder ein Gemisch aus flüssigem und festem CO₂ auf das flüssige Roheisen/Ferromangan aufgegeben und/oder im Bereich der Abstich- oder Kipprinne und gegebenenfalls der anschliessenden Torpedopfanne gleichzeitig mit dem flüssigen Eisen eingebracht. Weitere Verfahren worin CO₂ in gasförmiger, flüssiger oder fester Form zum Schutz von Flüssigstahl, insbesondere beim Giessen, gegen Oxidation und gegebenenfalls Nitridierung verwendet wird, sind in den Druckschriften FR-A-2 607 829, EP-A-0 154 585, EP-A-0 196 242, EP-A- 274 290 und EP-A-0 288 369 beschrieben.

Beim Schmelzen von Eisenprodukten, die brennbare Bestandteile enthalten, im Elektroschmelzofen sind jedoch solche Versuche bisher noch nicht durchgeführt worden, da die technischen Probleme gross sind. Im Gegensatz zu den genannten Beispielen aus der Metallurgie, muss erwähnt werden, dass beim Lichtbogenofen das Gefäss verhältnis mässig gross ist und der Ofen beim Chargieren offen ist. Dabei besteht aufgrund der Hitze und dem vielfach noch bestehenden Flüssigstahlsumpf im Ofen eine enorme thermische Saugwirkung, welche zu einer momentanen Lufterneuerung im Ofen führt. Im übrigen darf der Chargiervorgang weder behindert noch verzögert werden, da für die Effizienz eines Schmelzofens die Geschwindigkeit dieses Vorganges von ausschlaggebender Bedeutung ist.

Dadurch ist klar, dass durch gasförmige Zufuhr von inerten Gasen keine genügende Inertisierung erreicht werden kann. Das einzubringende Gas muss also in einer verdichteten Form vorliegen, damit mit einer vernünftigen Verweilzeit gerechnet werden kann. Wie im SPAL®-Verfahren (L'AIR LIQUIDE) oder im CON-SPAL®-Verfahren (Concast-Standard AG Zürich CH) beim Stranggiessen muss das Problem deshalb mit flüssigen bzw. festen Gasen erreicht werden.

Das Einbringen von flüssigem Stickstoff in einem teilweise flüssiges Metall enthaltenden Ofen birgt die Gefahr von Siedeverzügen in sich, wobei unbeherrschbare Auswirkungen auf die Ofenkonstruktion und die Umgebung ausgeübt werden können. Das gleiche gilt für Argon, welches aufgrund seines hohen Preises ohnehin keine wirtschaftliche Inertisierung ermöglicht. Es ist demzufolge Aufgabe der vorliegenden Erfindung, ein Verfahren zur Verfügung zu stellen, welches eine wirkungsvolle Inertisierung ohne die oben genannten Nachteile in einem Elektrostahlofen ermöglicht.

Erfindungsgemäss wird das Problem durch das im Patentanspruch 1 definierte Verfahren gelöst.

Das erfindungsgemässe Verfahren wird vorwiegend bei der Elektrostahlherstellung im Elektrolichtbogenofen angewendet. Bei der Herstellung von Stahl nach dem Elektrolichtbogen-Verfahren wird ein aus beliebigen Mischungen von Schrott, Roheisen, direkt reduzierten Eisenpellets und verschiedenen Legierungsmetallen bestehender metallischer Einsatz in den Schmelzofen eingesetzt. Neben elektrischer Energie können auch Sauerstoff und fossile Brennstoffe als Energieträger zum Schmelzen verwendet werden.

Der Schmelzofen besteht aus einer mit feuerfesten Materialien ausgekleideten Wanne zur Aufnahme der flüssigen Schmelze, darauf fest angeflanscht sitzt das aus wassergekühlten Rohrelementen bestehende Ofenoberteil zur Aufnahme des Schrottes, das Ofenoberteil wird mit dem schwenkbaren Ofendeckel, der Oeffnungen für die Grafitelektroden, Entstaubungsanschluss und Legierungszugabe hat, abgedeckt.

Die elektrische Energie wird vom Ofentransformator über Kupferleitungen auf die Grafitelektroden übertragen, wobei die Energie des sich zwischen den Elektrodenspitzen und dem metallischen Einsatz ausbildenden Lichtbogens das Schmelzen des Einsatzes bewirkt.

Vor der Chargierung werden die Elektroden aus dem Ofen entfernt, wobei der Deckel mit den Elektroden weggeschwenkt wird. Danach wird der Chargierkorb über den Ofen gefahren und das Schrottmaterial wird durch Oeffnen des Chargierkorbes in das Schmelzgefäss gebracht. Erfindungsgemäss wird nun, sobald der Chargierkorb über dem Ofen zur Chargierung bereitsteht, aus den vorzugsweise fest installierten Schneerohren Trockeneisschnee ausgestossen. Falls alternativ bewegliche Schneerohre zum Einsatz gelangen, werden diese in Richtung des Schmelzgefässes soweit ausgefahren, dass der Chargiervorgang ungehindert stattfinden kann. Vorzugsweise werden mehrere, z.B. drei Schneerohre verwendet, die seitlich in den Ofenoberteil führen und zueinander ca. in einem Winkel von 120° stehen. Sobald die Schneerohre in Position sind, wird Trockeneis ausgestossen. Die Chargierung findet während dem Trockeneisausstoss statt. Durch dieses Vorgehen wird der explosionsartige Rauchausstoss durch das Verbrennen der brennbaren Schrottnebenprodukte weitgehend verhindert.

Im erfindungsgemässen Verfahren wird kurz vor und während dem Chargiervorgang der Umgebung des Ofengefässes Sauerstoff entzogen, indem festes CO₂ eingeleitet wird. Dadurch wird der Verbrennungsprozess in dieser kritischen Phase der Chargierung so gesteuert, dass die explosionsartige Entwicklung von Rauchgasen vermieden wird. Durch das erfindungsgemässe Verfahren ist es gelungen, durch die Verwendung von festem CO₂ das zur Inertisierung erforderliche Gas in einer genügend dichten Form zuzuführen, um eine vernünftige Verweilzeit zu erzielen. Ein kg Trockeneis bildet bekanntlich ca. 500 l gasförmiges CO₂. Durch das kurzzeitige Eindringen und Ausbreiten einer genügenden Menge CO₂ über dem Schmelzgefäss im Lichtbogenofen ist es möglich, das flüssige Stahlbad in genügender Weise abzudecken und eine sofortige Erneuerung der Ofenatmosphäre durch Luft zu verhindern. Der wesentliche Punkt des erfindungsgemässen Verfahrens besteht darin, dass kurz vor, während und nach dem Chargieren das Trockeneis in fester Form zugeführt wird. Die Menge CO₂ ist abhängig vom Grade der Verunreinigungen des Schrottes mit brennbaren Substanzen. Der Vollständigkeit halber soll auch erwähnt werden, dass das Trockeneis auch in handelsüblicher Form, z.B. als Pellets oder Trockenschnee zum Einsatz gelangen kann.

Vorzugsweise werden die Schneerohre in den aus wassergekühlten Rohrelementen bestehenden Ofenoberteil fest eingebaut und die Öffnungen während der Schmelzphase durch Einblasen von Gasen offen gehalten. Eine andere Möglichkeit ist, die Schneerohre seitlich in den Elektroschmelzofen so weit einzuführen, dass das Chargieren nicht gestört wird. Sobald der Chargiervorgang beendet ist, werden die Schneerohre zurückgezogen, damit sie während dem Schmelzvorgang nicht beschädigt werden und beim Arbeiten am Schmelzofen hinderlich sind. Kurz vor dem Beschicken des Schmelzgefässes werden, nachdem der Deckel mit den Elektroden weggefahren ist, die Schneerohre soweit an die Oeffnung des Schmelzgefässe ausgefahren, dass der Chargiervorgang ungehindert stattfinden kann. Unmittelbar vor, während und nach dem Chargieren wird CO₂ so eingeblasen, dass im Schneerohr Trockeneis entsteht, welches durch die Schmelzofenhitze eine derartige Ausdehnung erfährt, dass der Sauerstoff verdrängt wird, wodurch das Verbrennen des am Schrott anhaftenden brennbaren Materials verzögert wird und keine explosionsartige Rauchbildung stattfindet.

Das CO₂ wird beispielsweise aus einem Grosstank mit flüssigem CO₂ zu den Schneerohren geleitet. Vorzugsweise wird flüssiges CO₂ über eine Blende, welche einen genügenden Druckabfall erzeugt in Trockenschnee verwandelt und über Schneerohre vor und während dem Chargieren in den Lichtbogenofen eingeblasen. Die Verfestigung erfolgt unmittelbar vor dem Ausstoss durch Dekompression des CO₂. Wie erwähnt, kann auch handelsübliches Trockeneis in Form von Trockenschnee oder Pellets erfindungsgemäss zum Einsatz gelangen.

Zur Herstellung von 70 t Stahl sind normalerweise ca. 700 kg CO₂ erforderlich, d.h. 10 kg CO₂/t Stahl. Das CO₂ hat zusätzlich auch noch die günstige Nebenwirkung, dass es die Temperatur der in die den Filteranlagen gehenden Abgase deutlich vermindert. Dadurch wird einerseits der Verschleiss der Filteranlage reduziert und durch Wegfall von zusätzlichen Kühlmassnahmen die Investitions- Und Betriebskosten des Filters verringert.

Trotz der zusätzlichen Kosten für das CO₂ ist das erfindungsgemässe Verfahren wirtschaftlich, da es neben kleineren Investitionen für Filtervorrichtungen auch eine nicht unwesentliche Einsparung von Energiekosten für den Betrieb wesentlich grösserer Filter mit sich bringt.

Da die Inertisierung kurz vor und während dem Chargieren erforderlich ist, müssen die Schneerohre bzw. die Einleitrohre für Trockeneis fest in einer für diesen Zweck geeigneten Position am Ofenoberteil angeordnet sein oder kurz vor dem Chargieren in eine solche Position über dem Schmelzgefäss gebracht werden. Die Rohre dürfen nicht zu weit in den Ofen hineinragen, da sie sonst durch den Schrott beschädigt werden können.

In den meisten Fällen wird der metallische Einsatz in einem mit einem aufklappbaren Boden versehenen Schrottkorb geladen. Zum Einsetzen in den Ofen wird der Schrottkorb - nach Ausschwenken des Ofendeckels - über das Ofengefäss gefahren, nach Betätigung der Bodenklappen des Schrottkorbes fällt der Einsatz in das Ofengefäss. Nach dem Einsatz in den Ofen wird der Inhalt des Korbes soweit niedergeschmolzen bis im Ofengefäss wieder genügend Platz für den Einsatz des zweiten und sinngemäss weiterer Körbe geschaffen wird. Die Anzahl der Schrottkörbe pro Schmelze richtet sich nach dem Abstichgewicht des Ofens und dem spezifischen Gewicht des Einsatzes. Bei einem Ofen mit Abstichgewicht von ca. 70 t werden z.B. bei 2 Korbeinsätzen im ersten Korb 40 t und im 2. Korb 36 t eingesetzt.

Der Einsatz besteht überwiegend aus Schrott, der stark schwankende Verunreinigungen an brennbaren Substanzen wie Oel, Kunststoff, Farbanstrich, Textilien, Holz und dergleichen enthält.

Beim Einsatz dieses Schrottes in den heissen, teilweise bereits schmelzflüssiges Metall enthaltenden Ofen, verbrennen diese Substanzen explosionsartig, wenn keine Inertisierung stattfindet. Dabei können in einem Zeitraum von nur 10-20 Sekunden Energiemengen von 80-150 MW entstehen. Durch diese Energiemengen wird neben dem durch die Verbrennung entstehenden Abgasvolumen die Umgebungsluft aufgeheizt. Die durch diesen kombinierten Vorgang stossartig auftretende Expansion der schadstoffreichen Luft- und Abgasvolumen wurde bisher mit grossem Aufwand in den Stahlwerkshallen erfasst und der Entstaubungsanlage zugeführt. Das erfindungsgemässe Verfahren vermindert diesen Aufwand beträchtlich. Bisher mussten lediglich zur Verarbeitung dieser kurzfristigen Volumenspitzen die Entstaubungssysteme mit überdimensionierten Filteranlagen ausgestattet werden. Die Absaugleistung für einen 70 t-Ofen bewegt sich zwischen 1-3 Millionen m³/h. Das erfindungsgemässe Verfahren erlaubt demzufolge eine beträchtliche Senkung der Investitions- und Betriebskosten für derartige Anlagen, ohne dass die Reinigungswirkung beeinträchtigt wird, es wird vielmehr eine Verbesserung erzielt.

Zusammen mit den weiterhin erforderlichen Filteranlagen ermöglicht das erfindungsgemässe Vefahren, dass die in Zukunft geforderten Grenzwerte für Schwermetalle (Zn, Pb, Cd) im Staubniederschlag in der Umgebung von Schmelzofenbetrieben eingehalten werden können. Ebenso dürfte das erfindungsgemässe Verfahren dazu beitragen, dass die Grenzwerte der Emissionen von Dioxinen und Furanen nicht überschritten werden.

Nachstehend ist die Erfindung beispielsweise durch die beiliegenden Figuren näher erläutert, wobei
Figur 1 eine Draufsicht eines Elektroschmelzofens von oben mit beweglichen Schneerohren zeigt,
Figur 2 eine Seitenansicht eines Elektroschmelzofens mit fest im Ofenoberteil eingebauten Schneerohren einschliesslich des Chargiergefässes zeigt,
Figur 3 eine Draufsicht des Elektroschmelzofens gemäss Fig. 2, und
Figur 4 analoge Ansicht des Elektroschmelzofens gemäss Figur 2 ist, jedoch mit aufgesetztem Ofendeckel und den Elektroden.

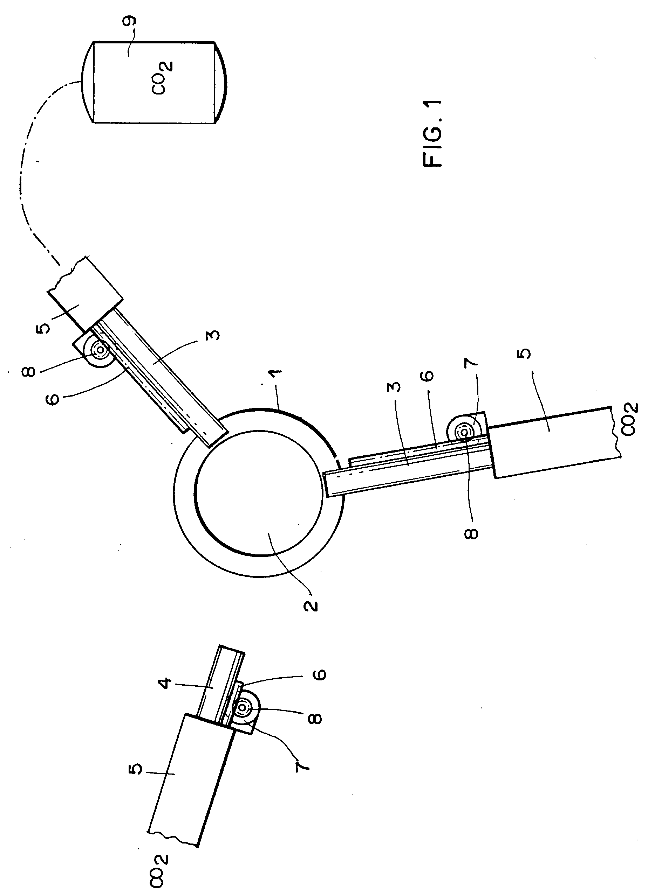

Figur 1 stellt den Elektroschmelzofen 1 mit dem Schmelzgefäss 2 von oben schematisch dar. Seitlich am Schmelzgefäss angeordnet sind die beweglichen Schneerohre 3, bzw. 4. Die Schneerohre 3 sind in der Stellung zur Zuführung von CO₂ Trockeneis, während das Schneerohr 4 sich im zurückgefahrenen Zustand befindet. Die Schneerohre können durch eine mechanische Vorrichtung 6, 7, 8 zum Schmelzofen 1 gefahren werden, bzw. wieder zurückgefahren werden. Die Schneerohre sind in einer Führungseinrichtung 5 auf Rollen gelagert. Sie werden durch einen zentralen Tank 9 mit flüssigem CO₂ gespiesen.

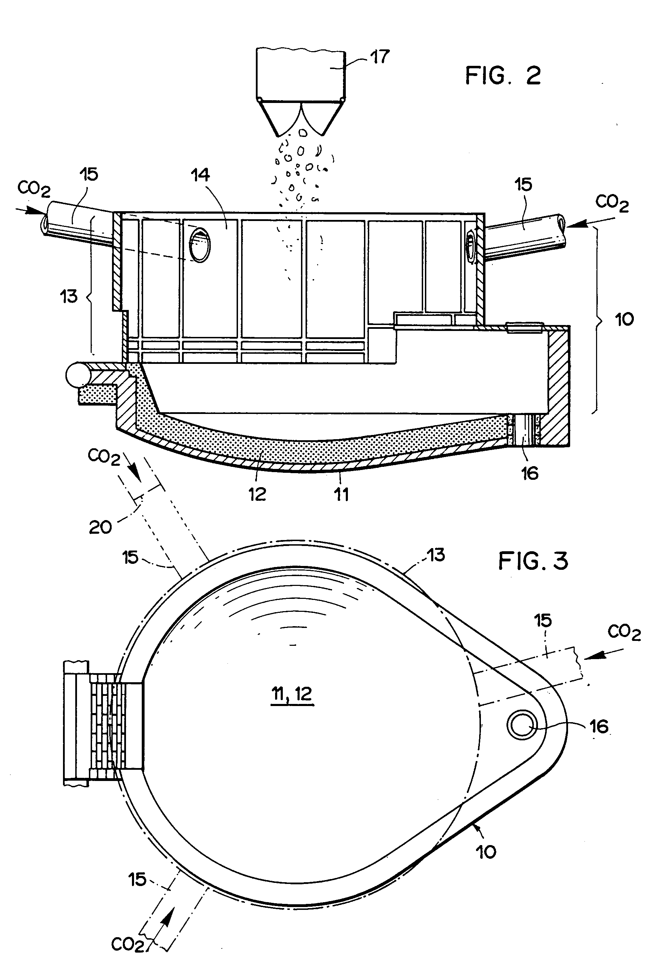

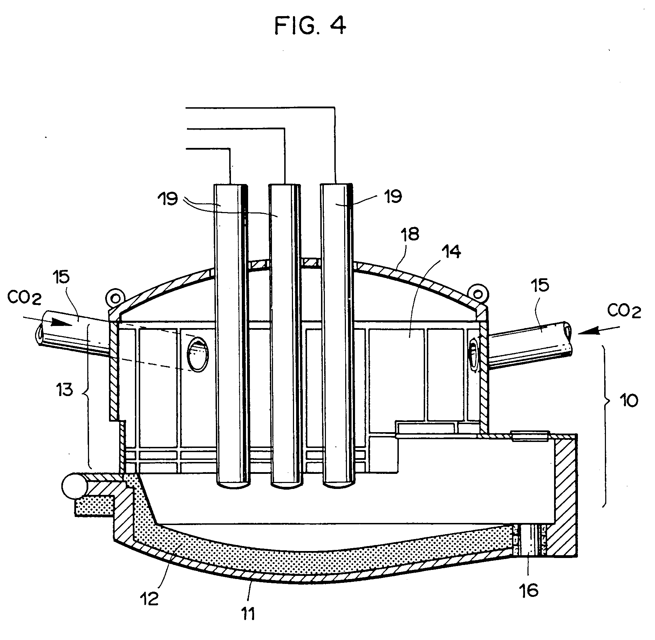

Figur 2 zeigt eine Seitenansicht eines Elektroschmelzofens 10 mit einer mit einer feuerfesten Auskleidung 12 versehenen Ofenwanne 11 und einem wassergekühltem Ofenoberteil 13 mit wassergekühlien Wandelementen 14. An ausgewählen Wandelementen 14 sind die Schneerohre 15 fest angeordnet. Die Ofenwanne 11 weist ein exzentrisches Giessloch 16 mit Stopfen im Bodenbereich (Bodenabstich) auf. Der Schmelzofen wird durch den Chargierkorb 17 mit Schrott beschickt. Durch die Schneerohre 15 wird festes CO₂ kurz vor und während dem Chargierprozess eingeleitet. Sobald das Chargieren zu Ende ist, wird der Chargierkorb 17 weggefahren und der Ofendeckel 18 (vgl. Fig.4) über den Schmelzofen gefahren um diesen wiederum zu verschliessen. Sobald die Elektroden 19 (vgl. Fig 4) erneut in Arbeitsposition sind, wird der Schmelzprozess fortgesetzt. Die integrierten Schneerohre werden während dem Prozess mit einer ausreichenden Menge CO₂ oder einem andern zweckmässigen Gas gespühlt um ein Verstopfen zu vermeiden.

Figur 3 zeigt eine Draufsicht des Elektroschmelzofens 10 gemäss Fig. 2, worin die feuerfest ausgekleidete Bodenwanne 11 mit dem exzentrischen Giessloch mit Stopfen sichtbar ist. Weiter ist die möglichst symmetrische Anordnung der fest am Ofenoberteil befestigten Schneerohre 15 dargestellt. Am einem der Schneerohre 15 ist die Blende 20 gezeigt, an welcher beim Austreten des CO₂ eine Druckreduktion statfindet, was zur Änderung des Aggregatszustandes des CO₂ führt.

Fig. 4 zeigt eine analoge Darstellung wie Fig. 2, wobei der Schmelzofen 10 durch den Ofendeckel 18 verschlossen ist und sich die Elektroden 19 in der Arbeitsstellung für den Schmelzvorgang befinden. Während dem Schmelzvorgang werden die Schneerohre 15 mit Gas gespühlt um eine Verstopfung zu vermeiden.

## Patentansprüche

1. Verfahren zur Unterdrückung von Staub und Rauch bei der Elektrostahlherstellung im Elektroschmelzofen beim Schmelzen von Eisenprodukten, die brennbare Bestandteile enthalten, dadurch gekennzeichnet, dass beim Chargieren des heissen Elektroschmelzofens, der bereits schmelzflüssiges Metall enthält, festes CO₂ in das Schmelzgefäss geleitet wird, wobei das Chargieren während dem Einleiten des festen CO₂ erfolgt.

2. Verfahren nach Anspruch 1 dadurch gekennzeichnet, dass der Elektroschmelzofen ein Lichbogenofen ist, der eine feuerfest ausgekleidete Ofenwanne (11) und einen wassergekühlten Ofenoberteil (13) besitzt.

3. Verfahren nach Anspruch 1 oder 2, dadurch gekennzeichnet, dass das feste CO₂ im Form von Kohlensäureschnee gleichzeitig mit dem Einleiten des flüssigen CO₂ durch seine Dekompression erzeugt wird, indem das füssige Gas durch ein Schneerohr (3, 4, 15), d.h. ein Rohr, das in seinem Innern eine Blende (20) aufweist, geleitet wird.

4. Verfahren nach Anspruch 3, dadurch gekennzeichnet, dass die Schneerohre (15) fest in den wassergekühlten Ofenoberteil (13) eingebaut sind und während dem Schmelzprozess durch Gaseinleitung offengehalten werden.

5. Verfahren nach Anspruch 3, dadurch gekennzeichnet, dass die Schneerohre (3,4) während dem Chargieren soweit über das Schmelzgefäss (1) ausgefahren werden, dass der Chargiervorgang nicht beeinträchtigt wird und die Schneerohre (3) unmittelbar nach dem Beschicken wieder zurückgezogen werden.

6. Verfahren nach Anspruch 1 dadurch gekennzeichnet, dass das feste CO₂ in Form von Trockeneis-Pellets eingeleitet wird.

7. Verfahren nach Anspruch 1 dadurch gekennzeichnet, dass das feste CO₂ in Form von Trockenschnee eingeleitet wird.

8. Verfahren nach einem der Ansprüche 1-7 dadurch gekennzeichnet, dass als Eisenprodukte Roheisen, Eisenschrott, direkt reduzierte Eisenpellets und verschiedene Legierungsmetalle oder deren Mischungen mit stark schwankenden Verunreinigungen geschmolzen werden.

## Claims

1. Method of suppressing dust and fumes in the production of electric steel in an electric melting furnace from iron products containing combustible constituents, characterized in that in charging the hot electric melting furnace, which already contains molten metal, solid carbon dioxide is led into the melting hearth, the charging taking place during the introduction of the solid carbon dioxide.

2. Method according to claim 1, characterized in that the electric melting furnace is an arc furnace having a refractory-lined furnace hearth (11) and a water-cooled furnace upper part (13).

3. Method according to claim 1 or 2, characterized in that the solid carbon dioxide is generated in the form of carbon dioxide snow simultaneously with the introduction of the liquid carbon dioxide by its decompression in that the liquid gas is led through a snowpipe (3, 4, 15), i.e. a pipe which has an orifice (20) in its interior.

4. Method according to claim 3, characterized in that the snowpipes (15) are fixed in the water-cooled furnace upper part (13) and are kept open during the melting process by introducing gas.

5. Method according to claim 3, characterized in that during charging the snowpipes (3,4) are extended over the melting hearth (1) to a point where the charging process is not impeded and the snowpipes (3) are retracted immediately after the charging.

6. Method according to claim 1, characterized in that the solid carbon dioxide is introduced in the form of dry ice pellets.

7. Method according to claim 1, characterized in that the solid carbon dioxide is introduced in the form of dry snow.

8. Method according to one of the claims 1 to 7, characterized in that pig iron, scrap iron, directly reduced iron pellets and various alloy metals or mixtures thereof, with greatly varying impurities, are melted as iron products.

## Revendications

1. Procédé pour supprimer la poussière et la fumée lors d'électrosidérurgie dans des fours de fusion électriques lors de la fusion de produits de fer contenant des composants combustibles, caractérisé en ce qu'au moment du chargement du four de fusion électrique chaud, qui contient déjà du métal liquide en fusion, on introduit dans la chaudière de fusion du CO₂ à l'état solide, le chargement s'effectuant pendant l'introduction du CO₂ à l'état solide.

2. Procédé selon la revendication 1, caractérisé en ce que le four électrique de fusion est un four à arc, qui comprend une cuve de four (11) ayant un revêtement intérieur réfractaire et une partie supérieure de four refroidie à l'eau (13).

3. Procédé selon la revendication 1 ou la revendication 2, caractérisé en ce que le CO₂ solide sous forme de neige carbonique se produit avec l'introduction du CO₂ liquide, par la décompression de ce dernier, en faisant passer le gaz liquide à travers un tuyau à neige (3, 4, 15), c'est-à-dire un tuyau à l'intérieur duquel se trouve un diaphragme (20).

4. Procédé selon la revendication 3, caractérisé en ce que les tuyaux à neige (15) sont disposés de manière fixe dans la partie supérieure du four (13) refroidie à l'eau et sont maintenus ouverts par l'introduction du gaz durant le procédé de fusion.

5. Procédé selon la revendication 3, caractérisé en ce que pendant le chargement, les tuyaux à neige (3, 4) s'éloignent de la chaudière de fusion (1) d'une distance telle qu'ils ne gênent pas l'opération de chargement et que les tuyaux à neige (3) s'en rapprochent immédiatement une fois le chargement effectué.

6. Procédé selon la revendication 1, caractérisé en ce qu'on introduit le CO₂ solide sous forme de granules de glace sèche.

7. Procédé selon la revendication 1, caractérisé en ce qu'on introduit le CO₂ solide sous forme de neige carbonique.

8. Procédé selon l'une des revendications 1-7 caractérisé en ce que l'on met en fusion, comme produits de fer, du fer brut, des ferrailles, des granules de fer directement réduits et différents alliages de métaux ou des mélanges de ceux-ci présentant des impuretés fortement variables.
